# EUROPEAN PATENT SPECIFICATION

(11) **EP 4 414 804 B1**
(45) Date of publication and mention of the grant of the patent: **19.11.2025**
(21) Application number: 23216626.4
(22) Date of filing: 14.12.2023
(51) Int. Cl.: G05D 1/245, G01C 21/00, G05D 1/246, G05D 1/248, G05D 105/15, G05D 107/20, G05D 109/10, G05D 111/50

(54) **IMPROVED DETERMINATION OF POSE FOR A ROBOTIC WORK TOOL**
VERBESSERTE POSEBESTIMMUNG FÜR EIN ROBOTISCHES ARBEITSWERKZEUG
DÉTERMINATION AMÉLIORÉE DE POSE POUR UN OUTIL DE TRAVAIL ROBOTIQUE

(30) Priority: 10.02.2023 SE 2350121
(43) Date of publication of application: 14.08.2024
(73) Proprietor: Husqvarna AB, 561 82 Huskvarna (SE)
(72) Inventor: LILJEDAHL, Marcus, Huskvarna (SE); LANDIN, Rickard, Huskvarna (SE)

(56) References cited:
- US-A1- 2016 278 285
- US-A1- 2021 141 044
- US-A1- 2022 276 053

## Description

### TECHNICAL FIELD

This application relates to a robotic work tool, such as a lawnmower, and a method for providing an improved determination of a position for the robotic work tool, and in particular to a robotic work tool, such as a lawnmower, and a method for providing an improved determination of a position for the robotic work tool utilizing deduced reckoning, and in particular to utilizing a gyro.

### BACKGROUND

Automated or robotic work tools such as robotic lawnmowers are becoming increasingly more popular and so is the use of the robotic work tool in various types of operational areas.

Such robotic work tools, in particular for robotic work tools being robotic lawnmowers, are often required to operate in operational areas that include irregular surfaces (such as slopes), houses, vegetation and other objects and obstacles. Such robotic work tools are also often required to operate in specific patterns or subareas, where it becomes important to accurately determine a position of the robotic work tool.

Prior art solutions rely on deduced reckoning for determining a position. The deduced reckoning may be used as the main mode of navigation or as a supplement to other navigation methods, such as based on satellite signals, beacon signals or other known navigation techniques.

Deduced reckoning navigation often rely on odometry (such as wheel counts) and a direction sensor for determining a position and possibly a path to that position. However, direction sensors, as well as all sensors, often offer from an error which makes the determining of a position potentially inaccurate. Adding to this the error in direction sensors, especially for gyros or gyroscopes, increase over time, the error thus drifting, which makes it difficult to account for any error from the start, as the error will continue to grow.

The patent application published as US2022276053A1 discloses a navigation system includes an IMU, a navigation estimator configured to estimate a current navigation solution based on (i) a last navigation solution, and (ii) a specific force vector and a n angular rate vector measured by the IMU, an RI sensor, an RI data preprocessor configured to: perform a priori transformations of last RI data and current RI data to obtain transformed last RI data and transformed current RI data based on the last navigation solution and the current navigation solution, respectively, an RI filter manager (RFM) configured to construct a delta pose registration cost gradient (DPRCG) measurement based on (i) the transformed last RI data, (ii) the transformed current RI data, (iii) the current navigation solution, and (iv) the last navigation solution. The navigation estimator is further configured to determine an absolute navigation solution based on at least (i) the current navigation solution, and (ii) the DPRCG measurement.

The patent application published as US20160278285A1 discloses a robotic work tool system comprising a charging station and a robotic work tool, said robotic work tool comprising a position determining device for determining a current position and at least one deduced reckoning navigation sensor, the robotic work toolbeing configured to determine that a reliable current position is possible to determine and in response thereto calibrate at least one of the at least one deduced reckoning navigation sensor.

The patent application published as US2021141044A1 discloses examples of systems and methods for calibrating or operating a magnetic sensor for sensor temperature or operating conditions are provided. The magnetic sensor can comprise a dual magnetometer sensor that comprises a first, low-power-consumption magnetometer (e.g., a magneto-inductive magnetometer) and a second higher-power-consumption magnetometer (e.g., a magneto-resistive magnetometer). The second magnetometer can have a lower unit-to-unit variation in temperature calibration parameters and can be used to temperature-correct readings from the first magnetometer. The magnetic sensor can dynamically switch between usage of the first magnetometer and the second magnetometer in order to provide a dynamic sample rate that can depend on conditions within the sensor or external to the sensor.

Thus, there is a need for an improved manner of providing advanced navigational functionality utilizing direction-sensing navigation while still utilizing cheap or uncomplicated sensors.

### SUMMARY

It is therefore an object of the teachings of this application to overcome or at least reduce those problems by providing a robotic work tool system comprising a robotic work tool, the robotic work tool comprising a controller, a deduced reckoning sensor comprising a direction sensor, and wherein the controller is configured to receive sensor input from the deduced reckoning sensors, determine a current sensed position of the robotic work tool based on the received sensor input and a previous position of the robotic work tool, calibrate the direction sensor, determine an error in sensor input, interpolate the error in sensor input to the previous position, and determine a corrected position of the robotic work tool based on the received sensor input, the interpolated error and the previous position of the robotic work tool as per the appended claims.

Other embodiments are discussed in the description below and as per the claims.

The robotic work tool is a robotic lawnmower.

It is also an object of the teachings of this application to overcome the problems by providing a method for use in a robotic work tool system comprising a robotic work tool, the robotic work tool comprising a controller, a deduced reckoning sensor comprising a direction sensor, and wherein the method comprises: receiving sensor input from the deduced reckoning sensors, determining a current sensed position of the robotic work tool based on the received sensor input and a previous position of the robotic work tool, calibrating the direction sensor, determining an error in sensor input, interpolating the error in sensor input to the previous position, and determining a corrected position of the robotic work tool based on the received sensor input, the interpolated error and the previous position of the robotic work tool as per the appended claims.

It is also an object of the teachings of this application to overcome the problems by providing a computer-readable medium carrying computer instructions that when loaded into and executed by a controller of a robotic work tool enables the robotic work tool to implement the method according to herein.

Further embodiments and aspects are as in the attached patent claims and as discussed in the detailed description.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention will be described in further detail under reference to the accompanying drawings in which:
Figure 1 shows a schematic view of the components of a robotic lawnmower according to some example embodiments of the teachings herein;
Figure 2 shows a schematic view of a robotic work tool system according to some example embodiments of the teachings herein;
Figure 3 shows a schematic view of a robotic work tool according to some examples of the problems addressed by the teachings herein;
Figure 4A shows a schematic view of a robotic work tool system according to some example embodiments of the teachings herein;
Figure 4B shows a schematic view of a robotic work tool system according to some example embodiments of the teachings herein;
Figure 4C shows a schematic view of a robotic work tool system according to some example embodiments of the teachings herein;
Figure 5 shows a corresponding flowchart for a method according to some example embodiments of the teachings herein; and
Figure 6 shows a schematic view of a computer-readable medium carrying computer instructions that when loaded into and executed by a controller of a robotic work tool, enables the robotic work tool to implement the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein. Like reference numbers refer to like elements throughout.

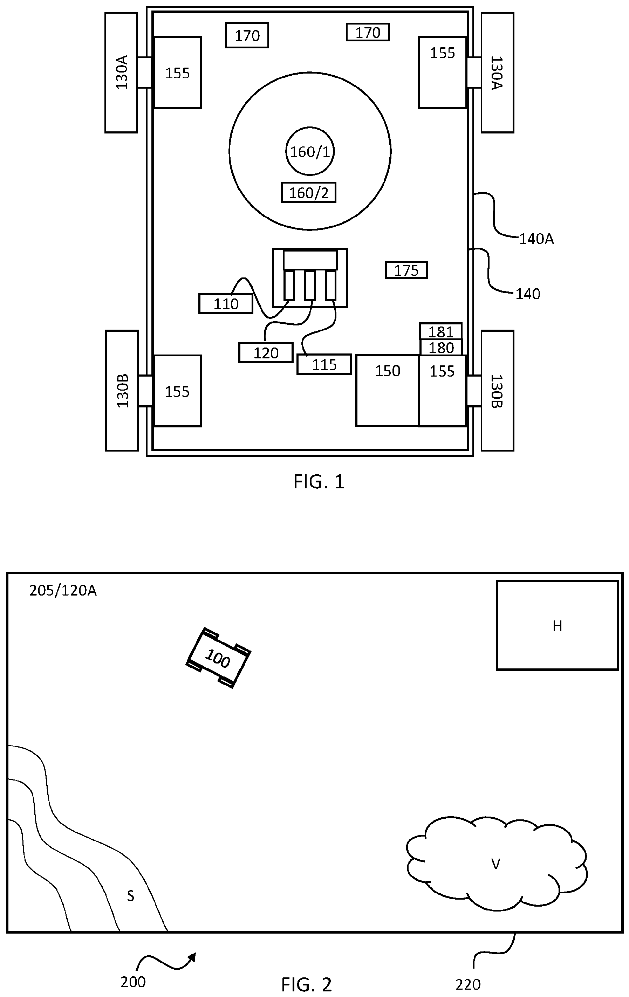

Figure 1 shows a schematic overview of a robotic work tool 100 being a robotic lawnmower 100. The robotic work tool 100 may be a multi-chassis type or a mono-chassis type (as in figure 1). A multi-chassis type comprises more than one main body parts that are movable with respect to one another. A mono-chassis type comprises only one main body part.

It should be noted that robotic lawnmower may be of different sizes, where the size ranges from merely a few decimetres for small garden robots, to even more than 1 meter for large robots arranged to service for example airfields.

It should also be noted that the robotic work tool is a self-propelled robotic work tool, capable of autonomous navigation within an operational area, where the robotic work tool propels itself across or around the operational area in a pattern.

The robotic work tool 100, being a robotic lawnmower 100, has a main body part 140, possibly comprising a chassis 140 and an outer shell 140A, and a plurality of wheels 130 (in this example four wheels 130, but other number of wheels are also possible, such as three or six).

The main body part 140 substantially houses all components of the robotic lawnmower 100. At least some of the wheels 130 are drivably connected to at least one electric motor 155 powered by a battery 150. It should be noted that even if the description herein is focused on electric motors, combustion engines may alternatively be used, possibly in combination with an electric motor. In the example of figure 1, each of the wheels 130 is connected to a common or to a respective electric motor 155 for driving the wheels 130 to navigate the robotic lawnmower 100 in different manners. The wheels, the motor 155 and possibly the battery 150 are thus examples of components making up a propulsion device. By controlling the motors 155, the propulsion device may be controlled to propel the robotic lawnmower 100 in a desired manner, and the propulsion device will therefore be seen as synonymous with the motor(s) 150. It should be noted that wheels 130 driven by electric motors is only one example of a propulsion system and other variants are possible such as caterpillar tracks.

The robotic lawnmower 100 also comprises a controller 110 and a computer readable storage medium or memory 120. The controller 110 may be implemented using instructions that enable hardware functionality, for example, by using executable computer program instructions in a general-purpose or special-purpose processor that may be stored on the memory 120 to be executed by such a processor. The controller 110 is configured to read instructions from the memory 120 and execute these instructions to control the operation of the robotic lawnmower 100 including, but not being limited to, the propulsion and navigation of the robotic lawnmower.

The controller 110 in combination with the electric motor 155 and the wheels 130 forms the base of a navigation system (possibly comprising further components) for the robotic lawnmower, enabling it to be self-propelled as discussed.

The controller 110 may be implemented using any suitable, available processor or Programmable Logic Circuit (PLC). The memory 120 may be implemented using any commonly known technology for computer-readable memories such as ROM, FLASH, DDR, or some other memory technology.

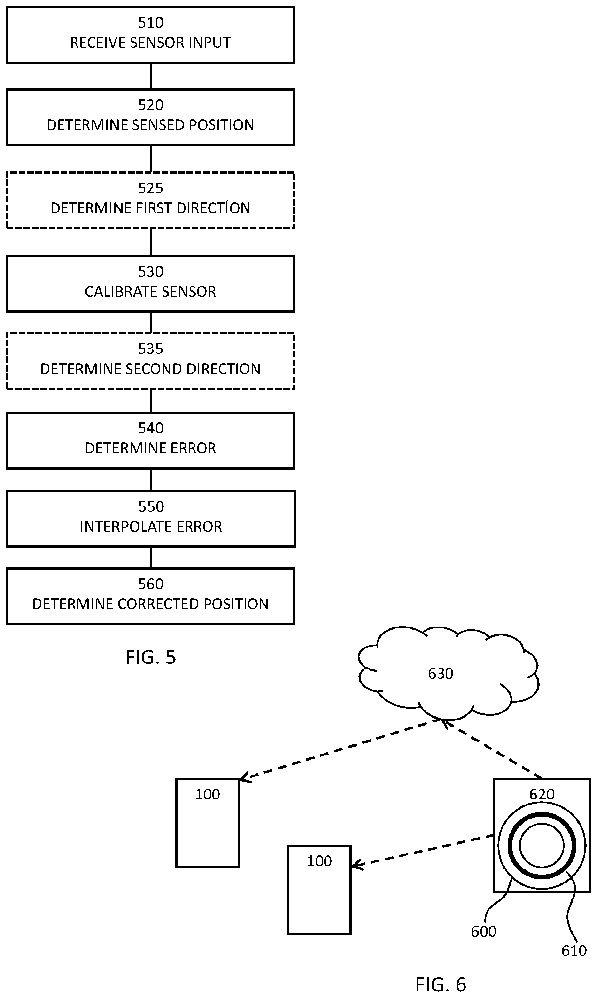

The robotic lawnmower 100 is further arranged with a wireless communication interface 115 for communicating with other devices, such as a server, a personal computer, a smartphone, the charging station, and/or other robotic work tools. Examples of such wireless communication devices are Bluetooth^{®}, WiFi^{®} (IEEE802.11b), Global System Mobile (GSM) and LTE (Long Term Evolution), to name a few. The robotic lawnmower 100 may be arranged to communicate with a user equipment (not shown but will be regarded as being an example of a server, as an example of a connected device) as discussed in relation to figure 2 below for providing information regarding status, location, and progress of operation to the user equipment as well as receiving commands or settings from the user equipment. The server is not shown explicitly in figure 1 (nor in figure 2), but may be seen as the server referenced 630 in figure 6. Alternatively or additionally, the robotic lawnmower 100 may be arranged to communicate with a server for providing information regarding status, location, and progress of operation as well as receiving commands or settings.

The robotic lawnmower 100 also comprises a work tool 160, which in the example of the robotic lawnmower 100 is a grass cutting device 160, such as a rotating blade 160/2 driven by a cutter motor 160/1

For enabling the robotic lawnmower 100 to navigate with reference to a wire, such as a boundary wire or a guide wire, emitting a magnetic field caused by a control signal transmitted through the wire, the robotic lawnmower 100 is, in some embodiments, configured to have at least one magnetic field sensor 170 arranged to detect the magnetic field and for detecting the wire and/or for receiving (and possibly also sending) information to/from a signal generator. In some embodiments, such a magnetic boundary is used to provide a border (not shown explicitly in figure 2, but deemed to be included in the boundary 220) enclosing an operational area (referenced 205 in figure 2).

In some embodiments the robotic lawnmower 100 comprises a satellite signal navigation sensor 175 configured to provide navigational information (such as position) based on receiving one or more signals from a satellite - possibly in combination with receiving a signal from a base station. In some embodiments the satellite navigation sensor is a GPS (Global Positioning System) device or other Global Navigation Satellite System (GNSS) device. In some embodiments the satellite navigation sensor 175 is a RTK sensor. This enables the robotic work tool to operate in an operational area bounded by a virtual border (not shown explicitly in figure 2 but deemed to be included in the boundary 220).

The robotic lawnmower 100 also comprises deduced reckoning sensors 180. The deduced reckoning sensors may be odometers, accelerometers or other deduced reckoning sensors. Specifically, the deduced reckoning sensors 180 comprises one or more direction sensors 181 configured to determine a current direction and/or any direction changes for the robotic work tool 100. In some embodiments the one or more direction sensors 181 includes at least one gyro or gyroscopic sensor. In some embodiments the one or more direction sensors 181 includes an Inertial Measurement Unit (IMU) comprising the at least one gyro or gyroscopic sensor. An inertial measurement unit (IMU) is an electronic device that measures and reports a body's specific force, angular rate, and sometimes the orientation of the body, using a combination of accelerometers, gyroscopes, and sometimes magnetometers. The at least one gyroscope provides a measured or sensed angular rate. The at least one accelerometer provides a measured or sensed specific force/acceleration. And the at least one magnetometer (optional) provides a measured or sensed magnetic field surrounding the body. Typical configurations contain one accelerometer, gyro, and magnetometer per axis for each of the three principal axes: pitch, roll and yaw.

As the inventors have realized environmental factors may cause any of these sensors to drift. Specifically, temperature changes, both caused by the environment as well as caused by components in the robotic work tool, may cause a drift. This drift, as the inventors have realized after inventive reasoning builds up over time and can be approximated or assumed to be linear - at least over shorter time periods, such as useful in the context of robotic work tools, and, in particular, robotic lawnmowers.

The robotic lawnmower 100 is in some embodiments arranged to operate according to a map application (indicated in figure 2 and referenced 120A) representing one or more operational areas (and possibly the surroundings of the operational area(s)) as well as features of the operational area(s) stored in the memory 120 of the robotic lawnmower 100. In some embodiments, the map is also or alternatively stored in the memory of a server. The map application may be generated or supplemented as the robotic lawnmower 100 operates or otherwise moves around in the operational area. In some embodiments, the map application is downloaded, possibly from the server. In some embodiments, the map application also includes one or more transport areas. The robotic work tool 100 is arranged to navigate according to the map based on the deduced reckoning sensors 180.

Figure 2 shows a robotic work tool system 200 in some embodiments. The schematic view is not to scale. The robotic work tool system 200 comprises one or more robotic work tools 100 according to the teachings herein arranged to operate in one or more operational areas 205 possibly bounded by a boundary 220. It should be noted that the operational area 205 shown in figure 2 is simplified for illustrative purposes.

The view of the operational area 205 is also intended to be an illustration or graphical representation of the map application 120A discussed in the above.

A server (not shown) may be an optional connected device for the robotic work tool 100 to communicate with - possibly for receiving maps or map updates. The server is not shown explicitly in figure 2 (nor in figure 1) but may be seen as the server referenced 630 in figure 6. The server comprises a controller for controlling the operation of the server, a memory for storing instructions and data relating to the operation of the server and a communication interface for enabling the server to communicate with other entities, such as the robotic work tool 100, and/or a User Equipment such as a mobile phone. The controller, the memory and the communication interface may be of similar types as discussed in relation to figure 1 for the robotic work tool 100.

As with figure 1, the robotic work tool(s) is a robotic lawnmower, whereby the robotic work tool system may be a robotic lawnmower system or a system comprising a combinations of robotic work tools, one being a robotic lawnmower, but the teachings herein may also be applied to other robotic work tools adapted to operate within an operational area.

As is shown in figure 2 there may be obstacles such as houses H or other structures, vegetation V, such as trees or bushes, and/or slopes S to mention a few examples of obstacles or objects in an operational area 205.

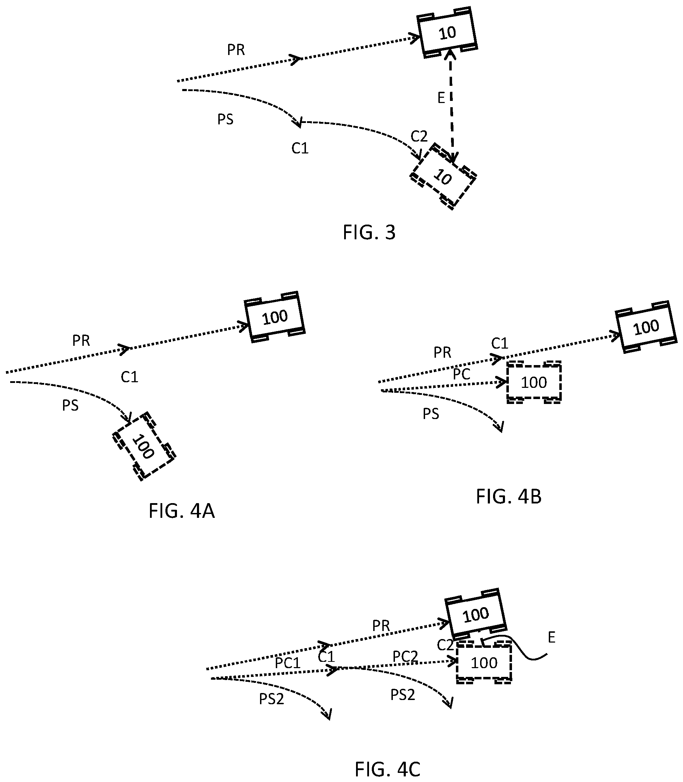

Figure 3 shows a situation where a prior art robotic work tool 10 is navigating along a path PR. The position (and possibly the path) of the robotic work tool 10 is be determined based on the deduced reckoning sensors usually by determining a speed or a distance travelled and a heading, which gives the position. The speed is in some embodiments determined based on odometry sensors or other deduced reckoning sensors. Similarly, the distance travelled may also be determined based on odometry sensors or other deduced reckoning sensors.

As is also illustrated in figure 3, the deduced reckoning sensors, and in particular any direction sensor, may suffer from an error, whereby a sensed path PS will differ from the real path PR. This will result in that a position determined for the robotic work tool 10 based on the deduced reckoning sensors will differ from the real position. In figure 3 the determined or sensed position is illustrated as a robotic work tool 10, but with dashed lines indicating the virtual representation of the robotic work tool 10 in a map application.

As is also illustrated the error in the sensed path grows over time. This is illustrated by the sensed path not being straight as the real path. To overcome such drift in the deduced reckoning sensors, the prior art robotic work tools 10 are arranged to calibrate the deduced reckoning sensors, and in particular the direction sensors. This is illustrated in figure 3 as in that the sensed path after a calibration at point C1, shows a smaller error compared to the real path.

However, and as the inventors have realized, this leads to an accumulated error in position as is shown in figure 3 by the error E being indicted as a second calibration point C2. Prior art solutions exist which calibrate and correct for this error E based on an alternatively determined position, such as through satellite (GPS for example) navigation. However, and as the inventors have also realized, this is only possible if the robotic work tool is arranged with such advanced navigation devices, and it is also only possibly in areas where reliable navigation is possible. For example, a satellite navigation sensor may not receive enough satellite sensors when under vegetation or behind a structure, to enable an accurate determination of a position. In such instances, there may be a lengthy time period before the position is actually corrected, which may lead to that the robotic work tool 10 is unable to perform a required operating pattern, or that the robotic work tool may navigate incorrectly as regards the map application and end up in a position which may be harmful or may cause the robotic work tool to get stuck.

Any attempt at simply calibrating the (direction) sensors more often to keep the error small will, however, result in the robotic work tool 10 stopping often to allow for the calibration of the direction sensor, which both wastes operating time and may be confusing to a user seeing the robotic work tool stopping all the time.

The inventors have, however, realized that by assuming or approximating the drift (or error) to be linear, the position at each calibration can be corrected.

Figure 4A shows a schematic view of an example embodiment of a robotic work tool 100 according to the teachings herein. As in the examples of figure 1 and 2, the robotic work tool 100 may be a robotic lawnmower 100. In the example of figure 4A the robotic work tool 100 has travelled a distance along a (real) path to a calibration point C1. At this calibration point C1, the robotic work tool 100 has determined a sensed position, as indicated by the sensed path PS, which both shows an incorrect position and heading. At this calibration position C1, the robotic work tool 100 calibrates the direction sensor 181, and possibly one or more of the other deduced reckoning sensors 180. The calibration is made by the robotic work tool 100 stopping and standing still for a time period allowing the direction sensor 181 to be calibrated.

After the calibration is done, an error in the direction sensor 181 is determined.

The error is determined by the robotic work tool 100 determining a first sensed direction before the calibration is made, as indicated by the heading of the dashed robotic work tool 100 in figure 4A, and determining a second sensed direction, as indicated by the heading of the (full lines) robotic work tool 100 in figure 4A, after the calibration is made.

The robotic work tool 100 is thereby enabled to determine the error as the difference in determined directions, i.e. the difference between the first and the second direction.

As is illustrated in figure 4B, the robotic work tool 100 then determines a corrected path PC based on the determined error. As discussed in the above and as the inventors have realized, the error may be approximated to be linear over time, and the robotic work tool 100 is thus able to interpolate the error back to a previous calibration point where a position for the robotic work tool 100 was determined. Knowing the final error, and that the error is increasing linearly, it is straightforward to determine the corrected path.

The robotic work tool 100 is thereby configured and enabled to determine a corrected path by retroactively correcting for the drift or error in the direction sensor 181.

In some embodiments, the same assumption is made for other deduced reckoning sensors, and the robotic work tool 100 is thus configured and enabled to determine a corrected path by retroactively correcting for the drift or error also in the other deduced reckoning sensors 180.

Figure 4B thus shows how a corrected position (as indicated by the dashed robotic work tool 100 in figure 4B) can be determined based on a retroactive correction of the (direction) sensor input.

Figure 4C shows an example of a robotic work tool 100 according to the teachings herein where the robotic work tool 100 is applying the teachings herein over more than one calibration (point). As can be seen in figure 4C, the retroactive correction of the position (and path) allows for a much smaller error E over time. As the errors at each calibration point are accumulated over time, the teachings herein exhibit significant benefits in being able to correct the position (retroactively), not only the direction, at each calibration point. Comparing the error E in figure 3 and the error E in figure 4C clearly shows this benefit in that the error E in figure 4C is much smaller than the error E in figure 3.

It should be noted that any error indicated in figures 3, 4A, 4B or 4C is only for illustrative purposes and are not to scale. Similarly, it should also be noted that the continued paths after a calibration point may or may not be illustrated in the correct starting heading, but the paths are only shown for illustrative purposes and are not to scale.

In the following some further details to what is discussed in the above with regards to directions sensors, such as IMUs, is discussed. The IMU gyroscope delivers the orientation of the IMU. The orientation can be represented as yaw, pitch and roll. Yaw is the heading or direction in the plane of the IMU. It says in which direction the IMU is rotated, ie north, south etc, but in degrees or radians and only with a relative angle. The drift will integrate to an offset of the yaw added to the real word orientation. A large drift will change the offset faster compared to a small drift. The gyro will always have a base offset which is impossible to remove since the gyro has no knowledge about real world coordinates, or the gyro has no knowledge of true north compared to a compass which has this information. Roll and pitch can be calculated based on gravitation force, but the yaw must be calculated and integrated based on the centrifugal force. A small error in the force will lead to an unrecoverable error in the yaw. This is called drift. Temperature changes, voltage noise and several other sources will affect the drift. If the gyro yaw is not calibrated it will have a constant drift of yaw, with some radians per second. The gyro yaw can self-calibrate when it senses it is completely still. It will then measure the centrifugal force and assume this is the normal, or bias, force that should always be subtracted from the centrifugal before it is used for integration. One large contributor to changes in the centrifugal force is temperature changes. Therefore, the calibration needs to be redone several times, and especially when the temperature increases or decreases. The added centrifugal force from temperature changes is proportional to the temperature changes. So if the temperature changes +10 Kelvin the drift will changed double compared to a temperature change of +5 Kelvin. In some applications temperature compensations tables are used in the Gyro. Since the temperature changes is one of the largest contributors to drift and temperature changes typically changes linear during a small time interval we can assume that drift will change linear during the same time interval. So it may change from 0mrad/s to 10mrad/s for instance. The teachings herein thus teach that the robotic work tool can assume that the drift was linear from last calibration to latest calibration. Once the robotic work tool has an estimate of the drift from last calibration, the robotic work tool can estimate the offset. Contemporary gyros normally adjusts the drift bias parameters but does no change in offset. As the robotic work tool estimates an offset is estimated, the robotic work tool is able to get a better estimate of the yaw in world coordinates and a better dead reckoning can be calculated. The trajectory from the dead reckoning is then recalculated from the earlier calibration.

The teachings herein thus enable the robotic work tool to Use the measured forces from the lasts gyro calibration to estimate the drift over the complete period since the calibration before. Then add the new estimated drift to the gyro offset to get a better estimate of the true heading from the gyro calibration performed earlier up to the last gyro calibration.

Figure 5 shows a flowchart for a general method according to herein. The method is for use in a robotic work tool as in figure 1 in a manner as discussed above in relation to figures 2, 3, 4A, 4B and 4C, namely for use in a robotic work tool system comprising a robotic work tool 100 comprising a deduced reckoning sensor 180, which comprises a direction sensor (181), and wherein the method comprises receiving 510 sensor input from the deduced reckoning sensors 180, in particular from the direction sensor 181, and determining 520 a current sensed position of the robotic work tool 100 based on the received sensor input and a previous position of the robotic work tool 100. The method further comprises calibrating 530 the direction sensor, and determining 540 an error in sensor input. The method also comprises interpolating 550 the error in sensor input to the previous position, in order to retroactively determine a corrected position and/or path. The method thus further includes determining 560 a corrected position of the robotic work tool 100 based on the received sensor input, the interpolated error and the previous position of the robotic work tool 100.

In some embodiments the robotic work tool further comprises a memory 120 being configured to store a map application 120A and to store data regarding a position of the robotic work tool 100, and wherein the method further comprises determining 560 the corrected position in the map application 120A.

In some embodiments the method further comprises interpolating 550 the error in sensor input to the previous position based on assumption that the error is drifting. And, in some such embodiments the method further comprises interpolating 550 the error in sensor input to the previous position based on assumption that the error is drifting by increasing linearly.

It should be noted that the inventors have also realized that the error may not only increase or change linearly, but also or alternatively proportional to the surrounding temperature, and specifically the temperature in or adjacent to the IMU. In some additional or alternative embodiments the robotic work tool 100 is thus also configured to determine or detect a temperature, for example in the IMU. In such embodiments the IMU is then seen to comprise or be connected to a temperature sensor. For other embodiments the temperature sensor is deemed to be part of the deduced reckoning sensors. The robotic work tool is also configured to (retroactively) determine a dependency or proportionality between the error and the change in temperature. Such proportionality may be linear (as discussed above) or it may be of other forms. In either case, the dependency can be determined using regression analysis tools, which are considered to be known by a skilled person and require no further details.

As discussed in the above, in some embodiments the method further comprises determining a sensed direction and to determine a corrected direction in addition to the positions being determined.

In some embodiments the method further comprises determining 540 the error in sensor input by determining an error in direction. In some such embodiments this is made by determining 525 a first direction before the calibration, determining 535 a second direction after the calibration 530 and determining 540 the error as the difference between the first and the second directions.

In some embodiments the method further comprises determining 520 the sensed position by determining a sensed path and determining 560 the corrected position by determining a corrected path. The paths are determined, as a skilled person would realize, based on the deduced sensor input from the deduced reckoning sensors 180, including the direction sensor 181.

In some embodiments the method further comprises calibrating 530 the direction sensor 181 by controlling the robotic work tool 100 to stop and stand still for a time period allowing for the calibration of the direction sensor 181. Some examples include 20, 30, 40, 45, 50, 60, 70, 80, 90, 120, 150 or 180 seconds or any time period there in between.

In some embodiments the direction sensor comprises at least one gyro sensor.

In some embodiments the direction sensor is an IMU comprising the at least one gyro sensor.

As mentioned above, this allows for maintaining a small error in determined position which allows for fewer calibrations of the robotic work tool. In some embodiments the calibration is made at intervals of 1, 5, 10 minutes or any range there in between.

Figure 6 shows a schematic view of a computer-readable medium 600 carrying computer instructions 610 that when loaded into and executed by a controller of a device, such as a robotic work tool 100 or a server 240, enables the device to implement the teachings herein. In the example of figure 6, the device will be exemplified as the robotic work tool 100. The computer-readable medium 600 may be tangible such as a hard drive or a flash memory, for example a USB memory stick or a cloud server. Alternatively, the computer-readable medium 600 may be intangible such as a signal carrying the computer instructions enabling the computer instructions to be downloaded through a network connection, such as an internet connection. In the example of figure 6, a computer-readable medium 600 is shown as being a hard drive or computer disc 600 carrying computer-readable computer instructions 610, being inserted in a computer disc reader 620. The computer disc reader 620 may be part of a cloud server 630 - or other server - or the computer disc reader 620 may be connected to a cloud server 630 - or other server. The cloud server 630 may be part of the internet or at least connected to the internet. The cloud server 630 may alternatively be connected through a proprietary or dedicated connection. In one example embodiment, the computer instructions are stored at a remote server 630 and be downloaded to the memory 120 of the robotic work tool 100 for being executed by the controller 110.

The computer disc reader 620 may also or alternatively be connected to (or possibly inserted into) a robotic work tool 100 for transferring the computer-readable computer instructions 610 to a controller of the robotic work tool 100 (presumably via a memory of the robotic work tool 100).

Figure 6 shows both the situation when a robotic work tool 100 receives the computer-readable computer instructions 610 via a server connection and the situation when another robotic work tool 100 receives the computer-readable computer instructions 610 through a wired interface. This enables for computer-readable computer instructions 610 being downloaded into a robotic work tool 100 thereby enabling the robotic work tool 100 to operate according to and implement the invention as disclosed herein.

## Claims

1. A robotic lawnmower system comprising a robotic lawnmower (100), the robotic lawnmower comprising a controller (110), a deduced reckoning sensor (180) comprising a direction sensor (181), and wherein the controller (110) is configured to
receive sensor input from the deduced reckoning sensors (180), and
determine a current sensed position of the robotic lawnmower (100) based on the received sensor input and a previous position of the robotic lawnmower (100), wherein the robotic lawnmower system is **characterized in that** the controller (110) is further configured to
calibrate the direction sensor and determine an error in direction sensor input by
determining a first sensed direction before the calibration is made and determining a second sensed direction after the calibration is made and determining the error as the difference between the first and the second direction,
interpolate the error in direction sensor input to an interpolated error at the previous position, wherein the error is approximated to be linear, and
determine a corrected position of the robotic lawnmower (100) based on the received sensor input, the interpolated error and the previous position of the robotic lawnmower (100).

2. The robotic lawnmower system (200) according to claim 1, wherein the robotic lawnmower further comprises a memory (120) being configured to store a map application (120A) and to store data regarding a position of the robotic lawnmower (100), and wherein the controller is further configured to determine the corrected position in the map application (120A).

3. The robotic lawnmower system (200) according to any preceding claim, wherein the controller is further configured to interpolate the error in sensor input to the previous position based on assumption that the error is drifting by increasing proportionally to a temperature.

4. The robotic lawnmower system (200) according to any preceding claim, wherein the controller is further configured to
determine the sensed position by determining a sensed path and to
determine the corrected position by determining a corrected path.

5. The robotic lawnmower system (200) according to any preceding claim, wherein the controller is further configured to calibrate the direction sensor (181) by controlling the robotic lawnmower (100) to stop and stand still for a time period allowing for the calibration of the direction sensor (181).

6. The robotic lawnmower system (200) according to any preceding claim, wherein the direction sensor comprises at least one gyro sensor.

7. The robotic lawnmower system (200) according to claim 6, wherein the direction sensor is an IMU comprising the at least one gyro sensor.

8. The robotic lawnmower system (200) according to claim 3 and 7, wherein the temperature is a temperature in or adjacent the IMU.

9. A method for use in a robotic lawnmower system comprising a robotic lawnmower (100), the robotic lawnmower comprising a controller (110), a deduced reckoning sensor (180) comprising a direction sensor (181), and wherein the method comprises:
receiving sensor input from the deduced reckoning sensors (180) and
determining a current sensed position of the robotic lawnmower (100) based on the received sensor input and a previous position of the robotic lawnmower (100), wherein the method is **characterized in that** the method further comprises
calibrating the direction sensor and determining an error in direction sensor input by
input by determining a first sensed direction before the calibration is made and determining a second sensed direction after the calibration is made and determining the error as the difference between the first and the second direction,
interpolating the error in direction sensor input to an interpolated error at the previous position, wherein the error is approximated to be linear, and
determining a corrected position of the robotic lawnmower (100) based on the received sensor input, the interpolated error and the previous position of the robotic lawnmower (100).

10. A computer-readable medium (600) carrying computer instructions (610) that when loaded into and executed by a controller (110) of a robotic lawnmower (100) enables the robotic lawnmower (100) to implement the method according to claim 9.

## Patentansprüche

1. Roboter-Rasenmähersystem, umfassend einen Roboter-Rasenmäher (100), der Roboter-Rasenmäher umfassend eine Steuerung (110), einen Koppelnavigationssensor (180), umfassend einen Richtungssensor (181), und wobei die Steuerung (110) konfiguriert ist zum
Empfangen von Sensoreingaben von den Koppelnavigationssensoren (180) und
Bestimmen einer aktuellen erfassten Position des Roboter-Rasenmähers (100) basierend auf der empfangenen Sensoreingabe und einer vorherigen Position des Roboter-Rasenmähers (100), wobei das Roboter-Rasenmähersystem **dadurch gekennzeichnet ist, dass** die Steuerung (110) ferner konfiguriert ist zum
Kalibrieren des Richtungssensors und Bestimmen eines Fehlers in dem Richtungssensoreingang durch Bestimmen einer ersten erfassten Richtung bevor die Kalibrierung vorgenommen wird und
Bestimmen einer zweiten erfassten Richtung nachdem die Kalibrierung vorgenommen wird und Bestimmen des Fehlers als die Differenz zwischen der ersten und der zweiten Richtung,
Interpolieren des Fehlers in dem Richtungssensoreingang in einen interpolierten Fehler an der vorherigen Position, wobei der Fehler als linear angenähert wird, und
Bestimmen einer korrigierten Position des Roboter-Rasenmähers (100) basierend auf der empfangenen Sensoreingabe, dem interpolierten Fehler und der vorherigen Position des Roboter-Rasenmähers (100).

2. Roboter-Rasenmähersystem (200) nach Anspruch 1, wobei der Roboter-Rasenmäher ferner einen Speicher (120) umfasst, der konfiguriert ist, um eine Kartenanwendung (120A) zu speichern und um Daten bezüglich einer Position des Roboter-Rasenmähers (100) zu speichern, und wobei die Steuerung ferner konfiguriert ist, um die korrigierte Position in der Kartenanwendung (120A) zu bestimmen.

3. Roboter-Rasenmähersystem (200) nach einem der vorstehenden Ansprüche, wobei die Steuerung ferner konfiguriert ist, um den Fehler in der Sensoreingabe zu der vorherigen Position zu interpolieren, basierend auf einer Annahme, dass der Fehler driftet, indem er proportional zu einer Temperatur zunimmt.

4. Roboter-Rasenmähersystem (200) nach einem der vorstehenden Ansprüche, wobei die Steuerung ferner konfiguriert ist zum
Bestimmen der erfassten Position durch Bestimmen eines erfassten Pfades und
Bestimmen der korrigierten Position durch Bestimmen eines korrigierten Pfads.

5. Roboter-Rasenmähersystem (200) nach einem der vorstehenden Ansprüche, wobei die Steuerung ferner konfiguriert ist, um den Richtungssensor (181) zu kalibrieren, durch Steuern des Roboter-Rasenmähers (100), um anzuhalten und für einen Zeitraum stillzustehen, der die Kalibrierung des Richtungssensors (181) ermöglicht.

6. Roboter-Rasenmähersystem (200) nach einem der vorstehenden Ansprüche, wobei der Richtungssensor mindestens einen Gyrosensor umfasst.

7. Roboter-Rasenmähersystem (200) nach Anspruch 6, wobei der Richtungssensor eine IMU ist, umfassend den mindestens einen Gyrosensor.

8. Roboter-Rasenmähersystem (200) nach Anspruch 3 und 7, wobei die Temperatur eine Temperatur in oder angrenzend an der IMU ist.

9. Verfahren zur Verwendung in einem Roboter-Rasenmähersystem, umfassend einen Roboter-Rasenmäher (100), der Roboter-Rasenmäher umfassend eine Steuerung (110) und einen Koppelnavigationssensor (180), umfassend einen Richtungssensor (181), und wobei das Verfahren umfasst:
Empfangen von Sensoreingaben von den Koppelnavigationssensoren (180) und
Bestimmen einer aktuellen erfassten Position des Roboter-Rasenmähers (100) basierend auf der empfangenen Sensoreingabe und einer vorherigen Position des Roboter-Rasenmähers (100), wobei das Verfahren **dadurch gekennzeichnet ist, dass** das Verfahren ferner umfasst
Kalibrieren des Richtungssensors und Bestimmen eines Fehlers in dem Richtungssensoreingang durch
Eingang durch Bestimmen einer ersten erfassten Richtung bevor die Kalibrierung vorgenommen wird und Bestimmen einer zweiten erfassten Richtung nachdem die Kalibrierung vorgenommen wird und Bestimmen des Fehlers als die Differenz zwischen der ersten und der zweiten Richtung,
Interpolieren des Fehlers in dem Richtungssensoreingang in einen interpolierten Fehler an der vorherigen Position, wobei der Fehler als linear angenähert wird, und
Bestimmen einer korrigierten Position des Roboter-Rasenmähers (100) basierend auf der empfangenen Sensoreingabe, dem interpolierten Fehler und der vorherigen Position des Roboter-Rasenmähers (100).

10. Computerlesbares Medium (600), das Computeranweisungen (610) enthält, die, wenn sie in eine Steuerung (110) eines Roboter-Rasenmähers (100) geladen und durch diese ausgeführt werden, es dem Roboter-Rasenmäher (100) ermöglichen, das Verfahren nach Anspruch 9 umzusetzen.

## Revendications

1. Système de tondeuse à gazon robotisée comprenant une tondeuse à gazon robotisée (100), la tondeuse à gazon robotisée comprenant un dispositif de commande (110), un capteur d'estimation par déduction (180) comprenant un capteur de direction (181), et dans lequel le dispositif de commande (110) est configuré pour
recevoir une entrée de capteur provenant des capteurs d'estimation par déduction (180), et
déterminer une position actuelle détectée de la tondeuse à gazon robotisée (100) en fonction de l'entrée de capteur reçue et d'une position précédente de la tondeuse à gazon robotisée (100), dans lequel le système de tondeuse à gazon robotisée est **caractérisé en ce que** le dispositif de commande (110) est en outre configuré pour
calibrer le capteur de direction et déterminer une erreur dans l'entrée de capteur de direction en déterminant une première direction détectée avant que le calibrage ne soit effectué et
en déterminant une seconde direction détectée après que le calibrage a été effectué et en déterminant l'erreur comme étant la différence entre la première et la seconde direction,
interpoler l'erreur dans l'entrée de capteur de direction avec une erreur interpolée à la position précédente, dans lequel l'erreur est approximativement linéaire, et
déterminer une position corrigée de la tondeuse à gazon robotisée (100) en fonction de l'entrée de capteur reçue, de l'erreur interpolée et de la position précédente de la tondeuse à gazon robotisée (100).

2. Système de tondeuse à gazon robotisée (200) selon la revendication 1, dans lequel la tondeuse à gazon robotisée comprend en outre une mémoire (120) configurée pour stocker une application cartographique (120A) et pour stocker des données concernant une position de la tondeuse à gazon robotisée (100), et dans lequel le dispositif de commande est en outre configuré pour déterminer la position corrigée dans l'application cartographique (120A).

3. Système de tondeuse à gazon robotisée (200) selon l'une quelconque revendication précédente, dans lequel le dispositif de commande est en outre configuré pour interpoler l'erreur dans l'entrée de capteur avec la position précédente en fonction de l'hypothèse selon laquelle l'erreur dérive en augmentant de manière proportionnelle à une température.

4. Système de tondeuse à gazon robotisée (200) selon l'une quelconque revendication précédente, dans lequel le dispositif de commande est en outre configuré pour
déterminer la position détectée en déterminant une trajectoire détectée et
déterminer la position corrigée en déterminant une trajectoire corrigée.

5. Système de tondeuse à gazon robotisée (200) selon l'une quelconque revendication précédente, dans lequel le dispositif de commande est en outre configuré pour calibrer le capteur de direction (181) en commandant la tondeuse à gazon robotisée (100) afin qu'elle s'arrête et reste immobile pendant une période de temps permettant le calibrage du capteur de direction (181).

6. Système de tondeuse à gazon robotisée (200) selon l'une quelconque revendication précédente, dans lequel le capteur de direction comprend au moins un capteur gyroscopique.

7. Système de tondeuse à gazon robotisée (200) selon la revendication 6, dans lequel le capteur de direction est un capteur IMU comprenant l'au moins un capteur gyroscopique.

8. Système de tondeuse à gazon robotisée (200) selon les revendications 3 et 7, dans lequel la température est une température à l'intérieur ou à proximité du capteur IMU.

9. Procédé destiné à être utilisé dans un système de tondeuse à gazon robotisée comprenant une tondeuse à gazon robotisée (100), la tondeuse à gazon robotisée comprenant un dispositif de commande (110), un capteur d'estimation par déduction (180) comprenant un capteur de direction (181), et dans lequel le procédé comprend :
la réception d'une entrée de capteur provenant des capteurs d'estimation par déduction (180) et
la détermination d'une position actuelle détectée de la tondeuse à gazon robotisée (100) en fonction de l'entrée de capteur reçue et d'une position précédente de la tondeuse à gazon robotisée (100), dans lequel le procédé est **caractérisé en ce que** le procédé comprend en outre
le calibrage du capteur de direction et la détermination d'une erreur dans l'entrée de capteur de direction en
entrée en déterminant une première direction détectée avant que le calibrage ne soit effectué et en déterminant une seconde direction détectée après que le calibrage a été effectué et en déterminant l'erreur comme étant la différence entre la première et la seconde direction,
l'interpolation de l'erreur dans l'entrée de capteur de direction avec une erreur interpolée à la position précédente, dans lequel l'erreur est approximativement linéaire, et
la détermination d'une position corrigée de la tondeuse à gazon robotisée (100) en fonction de l'entrée de capteur reçue, de l'erreur interpolée et de la position précédente de la tondeuse à gazon robotisée (100).

10. Support lisible par ordinateur (600) contenant des instructions informatiques (610) qui, lorsqu'elles sont chargées dans un dispositif de commande (110) d'une tondeuse à gazon robotisée (100) et exécutées par celui-ci, amènent la tondeuse à gazon robotisée (100) à mettre en œuvre la méthode selon la revendication 9.
